(19) **Europäisches Patentamt / European Patent Office / Office européen des brevets**

(11) **EP 2 435 798 B1**

(12) **FASCICULE DE BREVET EUROPEEN**

(45) Date de publication et mention
de la délivrance du brevet:
**01.05.2013 Bulletin 2013/18**

(21) Numéro de dépôt: **10723962.6**

(22) Date de dépôt: **20.05.2010**

(51) Int Cl.:
*H04Q 9/00* *(2006.01)*      *G01D 21/00* *(2006.01)*
*G08C 17/00* *(2006.01)*

(86) Numéro de dépôt international:
**PCT/EP2010/057013**

(87) Numéro de publication internationale:
**WO 2010/136388 (02.12.2010 Gazette 2010/48)**

(54) **DISPOSITIF DE MESURE COMPRENANT UN DIFFUSEUR ELECTROMAGNETIQUE**

MESSGERÄT MIT EINEM ELEKTROMAGNETISCHEN DIFFUSOR

MEASURING DEVICE WITH AN ELECTROMAGNETIC DIFFUSER

(84) Etats contractants désignés:
**AL AT BE BG CH CY CZ DE DK EE ES FI FR GB
GR HR HU IE IS IT LI LT LU LV MC MK MT NL NO
PL PT RO SE SI SK SM TR**

(30) Priorité: **29.05.2009 FR 0953594**

(43) Date de publication de la demande:
**04.04.2012 Bulletin 2012/14**

(73) Titulaire: **Centre National de la Recherche
Scientifique -
CNRS
75016 Paris Cedex 16 (FR)**

(72) Inventeurs:
- **AUBERT, Hervé
  F-31000 Toulouse (FR)**
- **PONS, Patrick
  F-31750 Escalquens (FR)**
- **CHEBILA, Franck
  F-31130 Balma (FR)**
- **JATLAOUI, Mohamed, Mehdi
  31400 Toulouse (FR)**

(74) Mandataire: **Cabinet Plasseraud
52, rue de la Victoire
75440 Paris Cedex 09 (FR)**

(56) Documents cités:
**AT-U2- 7 777**      **US-A- 5 767 802**
**US-A1- 2009 121 847**

**Description**

La présente invention concerne un dispositif de mesure, par exemple sans fil et passif, comprenant un détecteur et un diffuseur électromagnétique ayant une surface équivalente radar spécifique ainsi qu'un procédé de mesure utilisant un tel dispositif.

Il existe de nombreux domaines technologiques dans lesquels on peut vouloir mesurer une grandeur physique comme, par exemple, la température, la pression, la concentration en gaz. Dans beaucoup d'applications une connexion filaire entre le capteur et le système de traitement des données mesurées n'est pas souhaitable et une connexion sans fil est préférée. Il existe un besoin de réaliser des réseaux de capteurs sans fil et sans éléments actifs (i.e., sans alimentation en énergie, sans circuit de traitement des données, sans batteries).

Des détecteurs ou encore capteurs configurés pour détecter une variation de la grandeur physique à mesurer sont utilisés. Généralement, ces détecteurs fonctionnent grâce à de l'énergie électrique amenée par des fils électriques. Le problème majeur de ces détecteurs ou capteurs dits actifs (i.e., alimentés) est qu'ils nécessitent une source d'énergie ce qui limite leur durée de vie, augmente leur coût et génère un encombrement et un poids qui s'avèrent rédhibitoires dans beaucoup applications. En outre, lorsque les capteurs sont implantés dans des zones difficiles voire impossibles d'accès cette solution active s'avère inefficiente.

Dans certains cas, les fils électriques alimentant le détecteur peuvent perturber la mesure. Par exemple, lorsque les fils électrique traversent une zone présentant un rayonnement électromagnétique, ils peuvent agir comme des antennes captant le rayonnement électromagnétique.

Dans d'autre cas, il peut être souhaitable d'installer des détecteurs sans fil afin de simplifier la mise en place du dispositif de mesure.

Des capteurs passifs utilisant des composants à ondes acoustiques de surface (SAW mis pour « Surface Acoustic Waves » en anglais) ont récemment été proposés, voir par exemple AT 7777 U2 ou US 2009/121847 A1, mais ces capteurs souffrent notamment d'une faible distance d'interrogation (portée de quelques dizaines de centimètres en général) du fait de la présence de pertes non négligeables occasionnées lors des deux conversions onde électromagnétique/onde acoustique et onde acoustique/onde électromagnétique. Par ailleurs ces capteurs SAW sont difficiles à calibrer et nécessite un bon conditionnement du signal électromagnétique envoyé par le lecteur pour obtenir de bonnes résolutions.

L'utilisation d'un dispositif de mesure autonome ou sans fil pose le problème de l'identification du dispositif de mesure. En particulier, lors de l'utilisation d'une pluralité de dispositifs de mesure ou d'un dispositif de mesure comprenant une pluralité de détecteurs, il existe un besoin de permettre d'identifier chaque détecteur.

Des dispositifs de mesure connus utilisent une modulation spécifique du signal envoyé par les détecteurs en direction du dispositif de lecture ou de traitement des données mesurées par le détecteur. Cette solution s'appuie sur des détecteurs alimentés en énergie et implique une consommation en énergie généralement élevée.

Une autre solution permettant l'identification du détecteur d'un dispositif de mesure sans fil est l'utilisation de méthodes de radio-identification (RFID mis pour « Radio-Frequency Indentification » en anglais). Par exemple, il existe des solutions consistant à coller une étiquette RFID sur le détecteur afin de permettre son identification par un lecteur distant. Ces solutions sont limitées par la portée des lecteurs de dispositif RFID qui ne dépassent pas quelques mètres.

Il existe donc un besoin pour un dispositif de mesure d'une grandeur physique qui ne soit pas alimenté en énergie (i.e., qui soit passif) et qui puisse être identifié sans présenter les inconvénients des solutions de l'état de la technique, en particulier en termes de consommation d'énergie et de portée.

Un but de la présente invention est de proposer un nouveau dispositif de mesure pouvant être identifié ainsi qu'un procédé de mesure utilisant un tel dispositif.

L'invention propose ainsi un dispositif de mesure d'au moins une grandeur physique comprenant au moins un détecteur configuré pour détecter une variation de ladite au moins une grandeur physique, comportant en outre au moins un diffuseur électromagnétique ayant une surface équivalente radar spécifique, associé au détecteur pour identifier le détecteur au moyen de la surface équivalente radar du diffuseur électromagnétique.

Avantageusement, le détecteur du dispositif de mesure selon l'invention peut être identifié sans modulation spécifique du signal envoyé par le détecteur. En outre, au moins un détecteur du dispositif de mesure peut être identifié à plusieurs dizaines de mètre au moyen de la surface équivalente radar du diffuseur électromagnétique associé audit détecteur.

Un dispositif selon l'invention permet d'effectuer des mesures sans fil de grandeurs physiques à des distances de plusieurs dizaines de mètres.

Un dispositif de mesure selon l'invention peut en outre comporter l'une ou plusieurs des caractéristiques optionnelles suivantes, considérées individuellement ou selon toutes les combinaisons possibles :

　　■ ledit diffuseur électromagnétique est un diffuseur électromagnétique multi-bande dont la surface équivalente radar présente une pluralité de maxima à divers fréquences,
　　■ ledit détecteur est un détecteur à impédance variable dont l'impédance varie en fonction des variations de ladite au moins une grandeur physique,
　　■ ledit détecteur à impédance variable est un détecteur passif à transduction électromagnétique,
　　■ ledit diffuseur électromagnétique est couplé avec ledit détecteur à impédance variable de sorte que la variation de l'impédance dudit détecteur modifie la surface équivalente radar dudit diffuseur.

L'invention concerne également un système de mesure comprenant une pluralité de dispositifs de mesure selon l'invention.

L'invention se rapporte également à un procédé de mesure d'au moins une grandeur physique au moyen d'un dispositif de mesure selon l'invention, comprenant les étapes suivantes :

- on mesure ladite au moins une grandeur physique au moyen dudit détecteur du dispositif de mesure,
- on mesure la surface équivalente radar dudit diffuseur électromagnétique associé du détecteur du dispositif de mesure.

Le procédé de mesure selon l'invention peut également comprendre une étape où l'on identifie ledit détecteur du dispositif de mesure. Selon une variante de l'invention, on identifie ledit dispositif de mesure par la surface équivalente radar du diffuseur électromagnétique.

Le procédé de mesure selon l'invention peut comprendre l'utilisation d'un dispositif de mesure selon l'invention dont le détecteur est un détecteur à impédance variable dont l'impédance varie en fonction des variations de ladite au moins une grandeur physique et est couplé au diffuseur électromagnétique, et en outre une étape où l'on mesure ladite au moins une grandeur physique par la surface équivalente radar du diffuseur électromagnétique.

Le procédé de mesure selon l'invention peut comprendre l'utilisation d'un dispositif de mesure selon l'invention dont le diffuseur électromagnétique est un diffuseur multi-bande, et en outre une étape où l'on mesure ladite au moins une grandeur physique par les amplitudes et/ou les fréquences des maxima de la surface équivalente radar du diffuseur multi-bande.

L'invention sera mieux comprise à la lecture de la description qui va suivre, donnée uniquement à titre d'exemple et faite en se référant aux dessins annexés dans lesquels :

- la figure 1 est une représentation schématique d'un dispositif de mesure selon l'invention ;
- la figure 2 est une représentation schématique d'un diffuseur électromagnétique multi-bande;
- la figure 3 est une représentation d'un spectre de surface équivalente radar d'un diffuseur électromagnétique du type représenté sur la figure 2 ;
- la figure 4 est une représentation en coupe d'un détecteur passif pouvant être utilisé dans un dispositif de mesure selon l'invention ;
- la figure 5 illustre la modification de la surface équivalente radar d'un diffuseur couplé à un détecteur passif du type représenté à la figure 4 à différentes pressions.

Pour des raisons de clarté, les différents éléments représentés sur les figures ne sont pas nécessairement à l'échelle.

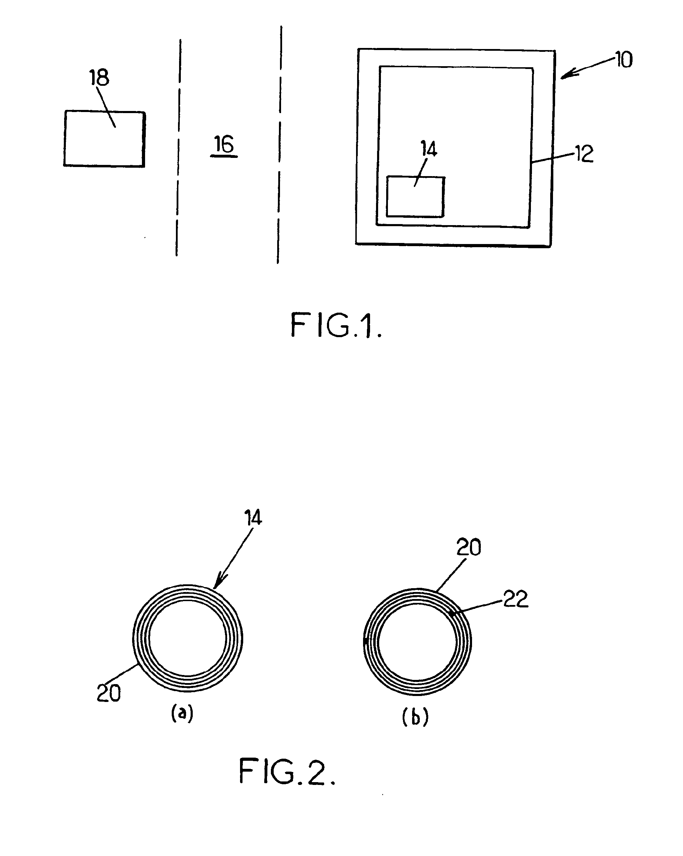

La figure 1 illustre un dispositif de mesure selon l'invention comprenant un détecteur 12 et un diffuseur électromagnétique 14.

Selon un mode de réalisation de l'invention, le dispositif de mesure est un dispositif de mesure autonome, à savoir un dispositif de mesure qui n'est pas alimenté par une source d'énergie extérieure.

Le détecteur 12 est configuré pour détecter des variations d'au moins une grandeur physique, par exemple une pression, une concentration, une température. Dans un mode de réalisation de l'invention, le détecteur 12 peut être configuré pour détecter plusieurs grandeurs physiques.

Le diffuseur électromagnétique 14 dispose d'une surface équivalente radar (SER) spécifique permettant d'identifier ledit diffuseur par analyse de sa surface équivalente radar. En associant le diffuseur électromagnétique 14 au détecteur 12, il est possible d'identifier le détecteur 12 au moyen de la surface équivalente radar dudit diffuseur électromagnétique 14.

Dans un mode de réalisation de l'invention, le diffuseur électromagnétique 14 peut être positionné à proximité du ou connecté au détecteur 12 ou encore collé sur le ou solidarisé au détecteur 12.

Le détecteur 12 du dispositif de mesure 10 peut être identifié au travers de la zone 16 au moyen d'un dispositif d'analyse radar 18. Le dispositif d'analyse radar 18 permet d'obtenir la surface équivalente radar du diffuseur électromagnétique 14 associé au détecteur 12.

Selon un mode de réalisation de l'invention, non représenté, le dispositif de mesure 10 peut comprendre une pluralité de détecteurs 12 chacun associé à un diffuseur électromagnétique 14 ayant une surface équivalente radar spécifique. Avantageusement, il est possible d'identifier chaque détecteur 12 du dispositif de mesure par la surface équivalente radar du diffuseur électromagnétique 14 associé sans que le détecteur soit alimenté et à des distances pouvant aller jusqu'à plusieurs dizaines de mètres.

Selon un mode de réalisation de l'invention, le diffuseur électromagnétique 14 est un diffuseur électromagnétique multi-bande dont la surface équivalente radar présente une pluralité de maxima à divers fréquences.

Un exemple de diffuseur électromagnétique multi-bande 14 est représenté sur la figure 2. Le diffuseur électromagnétique multi-bande 14 représenté sur la figure 2 comprend un ensemble de cinq anneaux métalliques concentriques 20. Les anneaux métalliques concentriques 20 peuvent être déposés sur un film diélectrique par toute technique connue de l'homme du métier.

Selon un mode de réalisation de l'invention, le rayon $R_n$ du n-ième anneau métallique, avec $R_1 >$

R2>R3 ..., est choisi de sorte que R1/R2=R2/R3= ...= τ, avec τ une constante supérieure à 1.

La figure 2b illustre un diffuseur électromagnétique multi-bande 14 comprenant des anneaux concentriques 20 et des commutateurs 22 permettant de modifier la surface équivalente radar du diffuseur électromagnétique multi-bande 14 en ouvrant ou en fermant ces commutateurs.

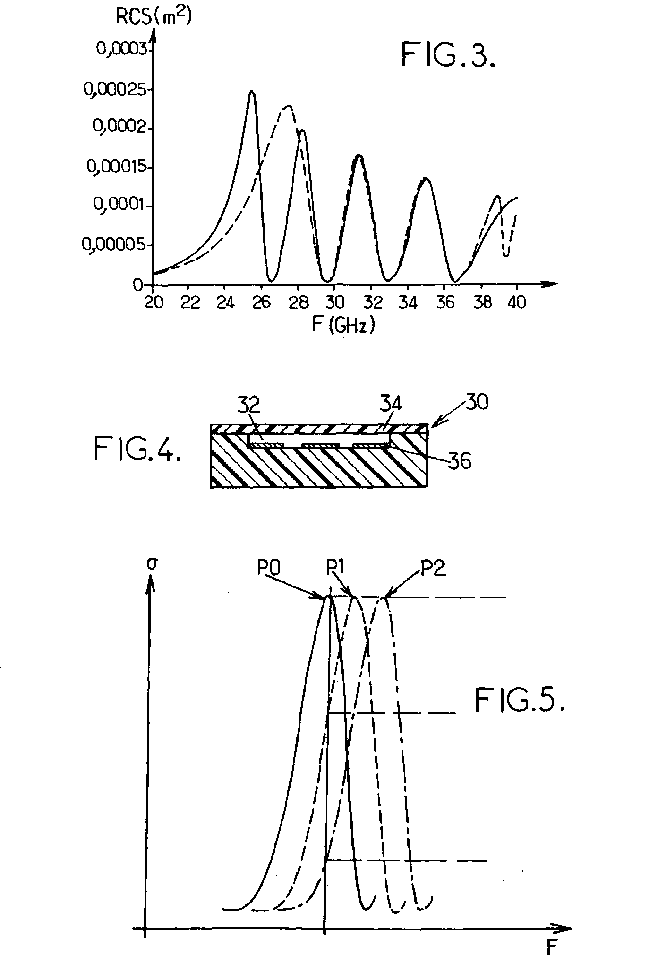

La figure 3 représente un spectre de surface équivalente radar d'un diffuseur électromagnétique multi-bande 14 du type représenté aux figures 2a et 2b comprenant quatre anneaux métalliques concentriques avec R1= 1,91 mm et τ=1,1 et donc R2 = 1,72 mm, R3 = 1,56 mm, R4 = 1,40 mm. Le diffuseur électromagnétique multi-bande 14 comprend également un commutateur 22 entre les deux anneaux les plus excentrés.

Lorsque le commutateur 22 est en position ouvert le spectre de surface équivalente radar, en trait plein sur la figure 3, présente une pluralité de maxima à différentes fréquences correspondantes aux fréquences de résonance des différents anneaux métalliques concentriques 20. Les quatre premiers maxima de la surface équivalente radar correspondent à la première fréquence de résonnance de chaque anneau métallique 20, à savoir F1 = 25,4 GHz, F2 = 28,2 GHz, F3 = 31,3 GHz, et F4 = 34,9 GHz. On retrouve pour les fréquences correspondant aux maxima du spectre de la surface équivalente radar du diffuseur F1/F2 = F2/F3 = F3/F4 - τ.

Lorsque le commutateur 22 est en position fermée, le spectre de la surface équivalente radar du diffuseur électromagnétique multi-bande est modifié comme représenté en trait pointillé sur la figure 3. Les deux premières fréquences de résonnance sont remplacées par une seule fréquence de résonnance.

Ainsi, il est possible de contrôler la surface équivalente radar d'un diffuseur électromagnétique multi-bande 14 du type représenté à la figure 2b afin de la rendre spécifique. Lorsqu'un tel diffuseur électromagnétique multi-bande 14 est associé à un détecteur, il est possible d'identifier le détecteur associé par analyse de la surface équivalente radar du diffuseur électromagnétique multi-bande 14.

D'autres exemples de diffuseurs électromagnétiques multi-bande 14 peuvent être utilisés, par exemple des antennes multi-bande comprenant des trappes, des antennes multi-bandes fractales ou encore tout type de diffuseurs à résonances multiples 14.

Selon un aspect de l'invention, le diffuseur électromagnétique 14, multi-bande ou non, est couplé avec un détecteur à impédance variable 12.

On entend par « détecteur à impédance variable » un détecteur dont l'impédance Zd va être modifiée lors de la détection de variation de la grandeur physique à mesurer.

On entend par « couplé » une liaison électromagnétique entre l'impédance du détecteur 12 et le diffuseur électromagnétique 14. En effet, le maximum de la surface équivalente radar d'un diffuseur 14 couplé avec une impédance Zd correspond à :

$$\sigma = \frac{\lambda^2 G^2 R^2}{|Za + Zd|^2 \pi},$$

Avec Za= R + jX l'impédance d'entrée du diffuseur électromagnétique 14, G le gain du diffuseur électromagnétique 14 et λ la longueur d'onde en espace libre.

Ainsi, il apparaît que le maximum de la surface équivalente radar dépend de l'impédance du détecteur 12.

Avantageusement, lorsque le détecteur 12 à impédance variable 12 et le diffuseur électromagnétique 14 sont couplés, il est possible à partir de la surface équivalente radar du diffuseur électromagnétique 14 de mesurer l'impédance du détecteur 12 à impédance variable et donc la valeur de la grandeur physique à mesurer.

Les inventeurs ont également constaté que la fréquence à laquelle la surface équivalente radar du diffuseur électromagnétique 14 présente un maximum dépendant de l'impédance du détecteur 12 auquel le diffuseur électromagnétique 14 est couplé.

Ainsi, la mesure de l'amplitude et de la fréquence du maximum de la surface équivalente radar du diffuseur électromagnétique 14 permet de mesurer la valeur de la grandeur physique.

Selon un mode de réalisation le diffuseur électromagnétique peut être intégré au détecteur. Un exemple de détecteur comprenant un diffuseur électromagnétique est représenté sur la figure 4.

La figure 4a représente une vue en coupe d'un détecteur de pression 30. Ce détecteur 30 est un détecteur passif à transduction électromagnétique.

On entend au sens de l'invention par « détecteur passif » un détecteur qui ne comprend pas de source d'énergie, à savoir n'ayant pas d'alimentation en énergie. On entend par « détecteur passif à transduction électromagnétique » un détecteur passif dont la valeur de la grandeur physique est mesurée directement par un champ électromagnétique extérieur.

Le détecteur de pression 30 représenté sur la figure 4 comprend une cavité 32 recouverte d'une membrane de silicium 34. La cavité 32 comprend un résonateur électromagnétique 36. Le résonateur électromagnétique peut être couplé à un diffuseur électromagnétique 14 ou bien faire partie du diffuseur électromagnétique 14.

Les inventeurs ont mis en évidence qu'une variation de pression sur la membrane de silicium entraîne une variation de la fréquence de résonance du résonateur électromagnétique 36.

Selon un mode de réalisation de l'invention, la membrane en silicium présente une épaisseur comprise entre 50 μm et 800 μm. Les inventeurs ont mis en évidence qu'une épaisseur d'environ 50 μm permettait d'augmenter la sensibilité du détecteur 12. Avec une membrane d'environ 50 μm, les inventeurs ont mesuré un déplacement de la fréquence de résonance du résonateur de l'ordre d'environ 370 MHz/bar.

La figure 5 représente les maxima de la surface équivalente radar d'un diffuseur électromagnétique 14 couplé à un détecteur 12 tel que représenté à la figure 4. Les courbes P1, P2 et P3 représentent les maxima de la surface équivalente radar du diffuseur électromagnétique 14 pour différentes pression mesurées pas le détecteur 12.

Il apparaît que, pour une fréquence F0 donnée la valeur de la surface équivalente radar du diffuseur électromagnétique 14 varie en fonction de la pression mesurée par le détecteur 12.

Il est donc possible par analyse de la surface équivalente radar du diffuseur électromagnétique 14 couplé au détecteur passif à transduction électromagnétique 12 d'obtenir la valeur de la grandeur physique mesurée par le détecteur.

Selon un mode de réalisation de l'invention, le détecteur passif à transduction électromagnétique 12 peut intégrer un diffuseur électromagnétique multi-bande 14.

Avantageusement, cela permet d'identifier le détecteur passif 12 au moyen de la surface équivalente radar spécifique du diffuseur électromagnétique multi-bande 14 et également de mesurer directement la valeur de la grandeur physique à partir de la surface équivalente radar du diffuseur électromagnétique multi-bande 14.

L'intégration d'un diffuseur électromagnétique multi-bande 14 permet d'augmenter la précision de la mesure de la grandeur physique. En effet, le couplage du diffuseur électromagnétique multi-bande 14 avec le détecteur 12 entraîne une modification de l'ensemble des maxima de la surface équivalente radar du diffuseur électromagnétique multi-bande 14, aussi bien en amplitude qu'en fréquence. En combinant les informations issues des modifications sur l'ensemble des maxima de la surface équivalente radar du diffuseur, il est possible de réduire les bruits et l'incertitude des mesures.

Selon un aspect de l'invention, il est possible de prévoir un système comprenant une pluralité de dispositifs de mesure selon l'invention. Ce système peut permettre de mesurer une répartition spatiale d'une grandeur physique à mesurer, par exemple un gradient de température, de pression ou de concentration.

Avantageusement, les détecteurs 12 du système de mesure intègrent des diffuseurs électromagnétiques multi-bandes 14 permettant d'identifier chaque détecteurs 12 et d'obtenir la valeur de la grandeur physique au moyen de la surface équivalente radar de chaque diffuseur électromagnétique multi-bande 14.

L'invention se rapporte également à un procédé de mesure utilisant un dispositif de mesure selon l'invention.

Selon un mode de réalisation de l'invention, le dispositif de mesure comprend un détecteur passif à induction variable intégrant un diffuseur électromagnétique multi-bande 12, le procédé comprend une étape où l'on mesure le spectre de la surface équivalente radar du diffuseur électromagnétique multi-bande 12. Les fréquences et/ou les amplitudes des maxima de la surface équivalente radar du diffuseur électromagnétique permettent d'identifier le détecteur 12 et d'obtenir la valeur de la grandeur physique mesurée par le détecteur 12.

L'invention ne se limite pas aux modes de réalisations décrits et ne sera pas interprétée de façon limitative, et englobe tout mode de réalisation équivalent.

**Revendications**

**1.** Dispositif de mesure (10) d'au moins une grandeur physique comprenant au moins un détecteur (12) configuré pour détecter une variation de ladite au moins une grandeur physique, **caractérisé en ce qu'**il comporte en outre au moins un diffuseur électromagnétique (14) ayant une surface équivalente radar spécifique, associé au détecteur (12) pour identifier le détecteur (12) au moyen de la surface équivalente radar du diffuseur électromagnétique (14).

**2.** Dispositif de mesure selon la revendication 1, dans lequel ledit diffuseur électromagnétique (14) est un diffuseur électromagnétique multi-bande dont la surface équivalente radar présente une pluralité de maxima à divers fréquences.

**3.** Dispositif de mesure selon l'une quelconque des revendications précédentes, dans lequel ledit détecteur (12) est un détecteur à impédance variable dont l'impédance varie en fonction des variations de ladite au moins une grandeur physique.

**4.** Dispositif de mesure selon la revendication 3, dans lequel ledit détecteur à impédance variable (12) est un détecteur passif à transduction électromagnétique.

**5.** Dispositif de mesure selon l'une des revendications 3 ou 4 dans lequel ledit diffuseur électromagnétique (14) est couplé avec ledit détecteur à impédance variable de sorte que la variation de l'impédance dudit détecteur modifie la surface équivalente radar dudit diffuseur.

**6.** Procédé de mesure d'au moins une grandeur physique au moyen d'un dispositif de mesure selon l'une quelconque des revendications 1 à 5, comprenant les étapes suivantes :

- on mesure ladite au moins une grandeur physique au moyen dudit détecteur (12) du dispositif de mesure (10),
- on mesure la surface équivalente radar dudit diffuseur électromagnétique (14) associé au détecteur (12) du dispositif de mesure (10).

**7.** Procédé selon la revendication 6, dans lequel on identifie ledit détecteur (12) du dispositif de mesure (10).

**8.** Procédé selon la revendication 7, dans lequel on identifie ledit dispositif de mesure (10) par la surface équivalente radar du diffuseur électromagnétique (14).

**9.** Procédé selon l'une des revendications 6 à 8, dans lequel le détecteur (12) du dispositif de mesure (10) est un détecteur à impédance variable dont l'impédance varie en fonction des variations de ladite au moins une grandeur physique et est couplé au diffuseur électromagnétique (14), le procédé comprend en outre une étape où l'on mesure ladite au moins une grandeur physique par la surface équivalente radar du diffuseur électromagnétique.

**10.** Procédé selon la revendication 9, dans lequel le diffuseur électromagnétique (14) est un diffuseur multibande, le procédé comprend en outre une étape où l'on mesure ladite au moins une grandeur physique par les amplitudes et/ou les fréquences des maxima de la surface équivalente radar du diffuseur multibande.

**Claims**

**1.** Device (10) for measuring at least one physical value, comprising at least one detector (12) configured to detect a variation in said at least one physical value, **characterised in that** it further comprises at least one electromagnetic diffuser (14) having a specific radar cross section associated with the detector (12) for identifying the detector (12) by means of the radar cross section of the electromagnetic diffuser (14).

**2.** Measuring device as claimed in claim 1, in which said electromagnetic diffuser (14) is a multi-band electromagnetic diffuser, the radar cross section of which exhibits a plurality of maxima at different frequencies.

**3.** Measuring device as claimed in any one of the preceding claims, in which said detector (12) is a variable impedance detector, the impedance of which varies as a function of variations in said at least one physical value.

**4.** Measuring device as claimed in claim 3, in which said variable impedance detector (12) is a passive electromagnetic transduction detector.

**5.** Measuring device as claimed in one of claims 3 or 4, in which said electromagnetic diffuser (14) is coupled with said variable impedance detector so that the variation in the impedance of said detector modifies the radar cross section of said diffuser.

**6.** Method of measuring at least one physical value by means of a measuring device as claimed in any one of claims 1 to 5, comprising the following steps:

- said at least one physical value is measured by means of said detector (12) of the measuring device (10),
- the radar cross section of said electromagnetic diffuser (14) associated with the detector (12) of the measuring device (10) is measured.

**7.** Method as claimed in claim 6, in which said detector (12) of the measuring device (10) is identified.

**8.** Method as claimed in claim 7, in which said measuring device (10) is identified by the radar cross section of the electromagnetic diffuser (14).

**9.** Method as claimed in one of claims 6 to 8, in which the detector (12) of the measuring device (10) is a variable impedance detector, the impedance of which varies as a function of variations in said at least one physical value, and is coupled with the electromagnetic diffuser (14), the method further comprising a step in which said at least one physical value is measured by the radar cross section of the electromagnetic diffuser.

**10.** Method as claimed in claim 9, in which the electromagnetic diffuser (14) is a multi-band diffuser, the method further comprising a step in which said at least one physical value is measured by the amplitudes and/or frequencies of the maxima of the radar cross section of the multi-band diffuser.

**Patentansprüche**

**1.** Messvorrichtung (10) wenigstens einer physikalischen Größe, die wenigstens einen Detektor (12) aufweist, der konfiguriert ist, um eine Variation der wenigstens einen physikalischen Größe zu erfassen, **dadurch gekennzeichnet, dass** sie ferner wenigstens einen elektromagnetischen Diffusor (14) aufweist, der eine spezifische Radarrückstrahlfläche aufweist, der mit dem Detektor (12) verbunden ist, um den Detektor (12) mittels der Radarrückstrahlfläche des elektromagnetischen Diffusors (14) zu identifizieren.

**2.** Messvorrichtung nach Anspruch 1, bei der der elektromagnetische Diffusor (14) ein elektromagnetischer Multiband-Diffusor ist, dessen Radarrückstrahlfläche eine Vielzahl von Maxima mit unterschiedlichen Frequenzen aufweist.

3. Messvorrichtung nach einem der vorhergehenden Ansprüche, bei der der Detektor (12) ein Detektor mit variabler Impedanz ist, dessen Impedanz in Abhängigkeit von den Variationen der wenigstens einen physikalischen Größe variiert.

4. Messvorrichtung nach Anspruch 3, bei der der Detektor mit variabler Impedanz (12) ein passiver Detektor mit elektromagnetischer Wandlung ist.

5. Messvorrichtung nach einem der Ansprüche 3 oder 4, bei der der elektromagnetische Diffusor (14) mit dem Detektor mit variabler Impedanz derart gekuppelt ist, dass die Variation der Impedanz des Detektors die Radarrückstrahlfläche des Diffusors ändert.

6. Messverfahren wenigstens einer physikalischen Größe mittels einer Messvorrichtung nach einem der Ansprüche 1 bis 5, das die folgenden Schritte aufweist:

    - Messung der wenigstens einen physikalischen Größe mittels des Detektors (12) der Messvorrichtung (10),
    - Messung der Radarrückstrahlfläche des elektromagnetischen Diffusors (14), der mit dem Detektor (12) der Messvorrichtung (10) verbunden ist.

7. Verfahren nach Anspruch 6, bei dem man den Detektor (12) der Messvorrichtung (10) identifiziert.

8. Verfahren nach Anspruch 7, bei dem man die Messvorrichtung (10) durch die Radarrückstrahlfläche des elektromagnetischen Diffusors (14) identifiziert.

9. Verfahren nach einem der Ansprüche 6 bis 8, bei dem der Detektor (12) der Messvorrichtung (10) ein Detektor mit variabler Impedanz ist, dessen Impedanz in Abhängigkeit von den Variationen der wenigstens einen physikalischen Größe variiert und der mit dem elektromagnetischen Diffusor (14) gekuppelt ist, wobei das Verfahren ferner einen Schritt aufweist, bei dem man die wenigstens eine physikalische Größe durch die Radarrückstrahlfläche des elektromagnetischen Diffusors misst.

10. Verfahren nach Anspruch 9, bei dem der elektromagnetische Diffusor (14) ein Multiband-Diffusor ist, wobei das Verfahren ferner einen Schritt aufweist, bei dem man die wenigstens eine physikalische Größe durch die Amplituden und/oder die Frequenzen der Maxima der Radarrückstrahlfläche des Multi

band-Diffusors misst.

FIG.1.

(a)

(b)

FIG.2.

FIG.3.

FIG.4.

FIG.5.

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- AT 7777 U2
- US 2009121847 A1